# EUROPÄISCHE PATENTSCHRIFT

(11) **EP 1 266 269 B1**
(45) Veröffentlichungstag und Bekanntmachung des Hinweises auf die Patenterteilung: **15.10.2003**
(21) Anmeldenummer: 01917063.8
(22) Anmeldetag: 05.03.2001
(51) Int. Cl.: G05B 19/042, H05B 37/02

(54) **SYSTEM UND STEUEREINRICHTUNG ZUM STEUERN MEHRERER AKTOREN EINES RAUMES**
SYSTEM AND CONTROL DEVICE FOR THE CONTROL OF SEVERAL ACTUATORS IN A ROOM
SYSTEME ET DISPOSITIF DE COMMANDE PERMETTANT DE COMMANDER PLUSIEURS ACTIONNEURS D'UNE PIECE

(30) Priorität: 15.03.2000 DE 10012508
(43) Veröffentlichungstag der Anmeldung: 18.12.2002
(73) Patentinhaber: Luxmate Controls GmbH, 6850 Dornbirn (AT)
(72) Erfinder: BEER, Stefan, A-6941 Langenegg (AT); HARTMANN, Martin, A-6850 Dornbirn (AT); HAUER, Stefan, A-6850 Dornbirn (AT); GEIGINGER, Joachim, A-6845 Hohenems (AT); WERNER, Walter, A-6850 Dornbirn (AT)
(74) Vertreter: Schmidt-Evers, Jürgen, Dipl.-Ing.
(86) Internationale Anmeldenummer: EP0102465
(87) Internationale Veröffentlichungsnummer: WO01069331

(56) Entgegenhaltungen:
- EP-A- 0 434 986
- EP-A- 0 488 178
- DE-A- 19 546 831
- DE-A- 19 619 281
- DE-A- 19 623 836
- DE-U- 9 110 348
- DE-U- 29 602 328
- GB-A- 2 313 924
- US-A- 4 413 314

## Beschreibung

Die vorliegende Erfindung betrifft ein System und eine Steuereinrichtung zum Steuern mehrerer in einem Raum angeordneter Aktoren, wie beispielsweise Beleuchtungseinrichtungen, Heizungseinrichtungen, Klimaanlagen und dergleichen, nach dem Oberbegriff von Anspruch 1.

Ein derartiges System ist beispielsweise aus der DE 196 19 281 A1 der Anmelderin bekannt. Bei dem in dieser Druckschrift offenbarten System sind mehrere unterschiedliche Lichtquellen, insbesondere direkte und indirekte Lichtquellen, die in einem Raum angeordnet sind, über einen Bus mit einer zentralen Steuereinrichtung verbunden. Diese Steuereinrichtung steuert über den Bus die Leistungsaufnahme der einzelnen Betriebsgeräte und somit die Lichtstärken der einzelnen Lichtquellen im Raum. An der Steuereinrichtung dieses Systems sind zwei Bedienelemente vorgesehen, die dem Benutzer des Systems zum Einstellen bzw. Verändern der Gesamthelligkeit des Raumes und des Verhältnisses der Lichtstärken der direkten und der indirekten Lichtquellen dienen.

Ferner ist auch aus dem Artikel "Lichtmanagement bringt zahlreiche Vorteile" von C.Tropp in etz, Band 113, 1992, Heft 2, Seiten 84-87, ein Lichtmanagement-System der Anmelderin beschrieben, bei dem mehrere unterschiedliche Beleuchtungskomponenten und unterschiedliche Sensoren über ein Bussystem mit einer zentralen Steuereinrichtung verbunden sind. Die Steuereinrichtung regelt die einzelnen Beleuchtungskomponenten unter Berücksichtigung der von den Sensoren erfaßten Meßwerte, wie beispielsweise der Außenhelligkeit, und stellt somit dem Anwender ein wirtschaftliches Lichtmanagement-System zur Verfügung.

Schließlich beschreibt die DE 195 46 831 A1 ein System zum Steuern von Aktoren, bei dem ein Touchscreen zum Einsatz kommt. Die Touchscreen-Technik, welche dem Fachmann an sich bekannt ist, ermöglicht das Darstellen von bestimmten Zuständen sowie ein Steuern und Regeln der Aktoren durch eine einfache Berührung des Bildschirms. Hierdurch wird die Bedienung des gesamten Systems vereinfacht.

Ausgehend von dem in der DE 195 46 831 A1 beschriebenen System ist es Aufgabe der vorliegenden Erfindung, ein System und eine Steuereinrichtung zum Steuern mehrerer in einem Raum angeordneter Aktoren vorzusehen, die dem Benutzer eine nochmals einfachere und ergonomischere Bedienung der Steuereinrichtung ermöglichen, um die einzelnen Aktoren eines Raumes gemäß seinen Wünschen zu steuern.

Diese Aufgabe wird durch ein System bzw. eine Steuereinrichtung zum Steuern mehrerer in einem Raum angeordneter Aktoren gelöst, wobei die Steuereinrichtung eine Touchscreen-Vorrichtung zur Anzeige und Einstellung der Parameter der Aktoren aufweist. Die vorliegende Erfindung ist hierbei nicht nur auf Beleuchtungskomponenten beschränkt, sondern der Begriff Aktoren umfaßt sämtliche zur Raumsteuerung verwendbaren Geräte, wie Lichtquellen, Jalousien, Heizungsanlagen, Klimaanlagen, Lüftungsanlagen, etc. Erfindungsgemäß sind auf der Touchscreen-Vorrichtung neben den Aktoren auch die Anordnung des Raumes und wesentlicher Elemente des Raumes darstellbar, wobei die Positionen der verschiedenen Aktoren in dem jeweiligen Raum durch den Benutzer über die Touchscreen-Vorrichtung eingebbar sind.

Erfindungsgemäß erfolgt die Anzeige und Einstellung der Parameter der Aktoren auf der Touchscreen-Vorrichtung in drei Bedienebenen, wobei die erste Bedienebene zum Abruf von Standardeinstellungen der Parameter der Aktoren dient, welche bestimmten durch den Benutzer gewünschten Stimmung entsprechen, wobei die zweite Bedienebene zur Darstellung und Veränderung der Parameter der einzelnen Aktoren dient und wobei die dritte Bedienebene der Konfiguration der Aktoren sowie der Zuordnung der Aktoren zu Positionen in dem jeweiligen Raum dient.

Durch die Unterteilung in die drei oben genannten Bedienebenen wird eine für den Benutzer leicht verständliche und logische Benutzerführung erhalten. Ferner wird durch eine graphische Darstellung des Raumes sowie der Aktoren eine gegenüber dem Stand der Technik einfachere und ergonomischere Bedienung der Steuereinrichtung erreicht, so daß ein Benutzer keine Programmierkenntnisse haben muß. Derartige Programmierkenntnisse sind bei der vorliegenden Erfindung selbst bei der erstmaligen Installation des Systems in einem Raum zur Konfigurierung der Steuereinrichtung nicht erforderlich.

Vorzugsweise sind die einzelnen Aktoren über ein gemeinsames Bussystem mit der zentralen Steuereinrichtung verbunden, und die einzelnen an dem Bussystem angeschlossenen Aktoren werden von der Steuereinrichtung automatisch erkannt.

In einer bevorzugten Ausführungsform weist die Touchscreen-Vorrichtung der Steuereinrichtung einen sog. Screensaver-Modus auf, bei dem nach einer vorbestimmten Zeitdauer der Nicht-Bedienung der Touchscreen-Vorrichtung diese zum Energiesparen und Schonen des Bildschirms der Touchscreen-Vorrichtung ausgeschaltet wird. Die Aktivierung aus dem Screensaver-Modus kann beispielsweise durch Berühren des Bildschirms der Touchscreen-Vorrichtung oder durch Erfassen eines entsprechenden Meßsignals durch einen Sensor, der auf eine Annäherung durch den Benutzer an die Touchscreen-Vorrichtung reagiert, erfolgen.

Weiter ist es von Vorteil, wenn die Steuereinrichtung eine Speichereinrichtung aufweist, in der die verschiedenen Standardeinstellungen der Parameter der Aktoren speicberbar sind, welche den bestimmten durch den Benutzer gewünschten Stimmungen für den jeweiligen Raum entsprechen.

Ferner weist das System vorzugsweise einen oder mehrere Sensoren zur Erfassung von Umgebungsbedingungen, wie beispielsweise Lichteinfall durch Fenster, Raumtemperatur, Luftfeuchtigkeit und dergleichen, in dem Raum auf, so daß die Steuereinrichtung die Parameter der Aktoren entsprechend den von den Sensoren erfaßten Meßwerte der Umgebungsbedingungen verändern bzw. anpassen kann.

Um die Bedienung der Touchscreen-Vorrichtung für den Benutzer weiter zu vereinfachen, erfolgt die Anzeige und Einstellung der Parameter der Aktoren vorzugsweise in mehreren Bedienebenen, insbesondere in einer ersten Auswahlebene, einer zweiten Einstellebene und einer dritten Zeit- , Konfigurations- und Hilfeebene.

Weitere vorteilhafte Ausgestaltungen und Weiterbildungen der Erfindung sind Gegenstand weiterer Unteransprüche.

Ein bevorzugtes Ausführungsbeispiel der vorliegenden Erfindung wird nachfolgend anband der anliegenden Zeichnung näher erläutert. Darin zeigen:
- Fig. 1: eine schematische Darstellung des Aufbaus des erfindungsgemäßen Systems;
- Fig. 2: eine schematische Darstellung des Aufbaus der erfindungsgemäßen Steuereinrichtung des in Fig. 1 dargestellten Systems;
- Fig. 3: eine Gesamtübersicht der Bedienungsfunktionen der Touchscreen-Vorrichtung der erfindungsgemäßen Steuereinrichtung;
- Fig. 4: eine beispielshafte Darstellung einer Touchscreen-Bedienoberfläche der ersten Auswahlebene;
- Fig. 5 und 6: beispielhafte Darstellungen einer Touchscreen-Bedienoberfläche der zweiten Einstellebene; und
- Fig.7 bis 11: beispielhafte Darstellungen von Touchscreen-Bedienoberflächen der dritten Zeit-, Konfigurations- und Hilfeebene.

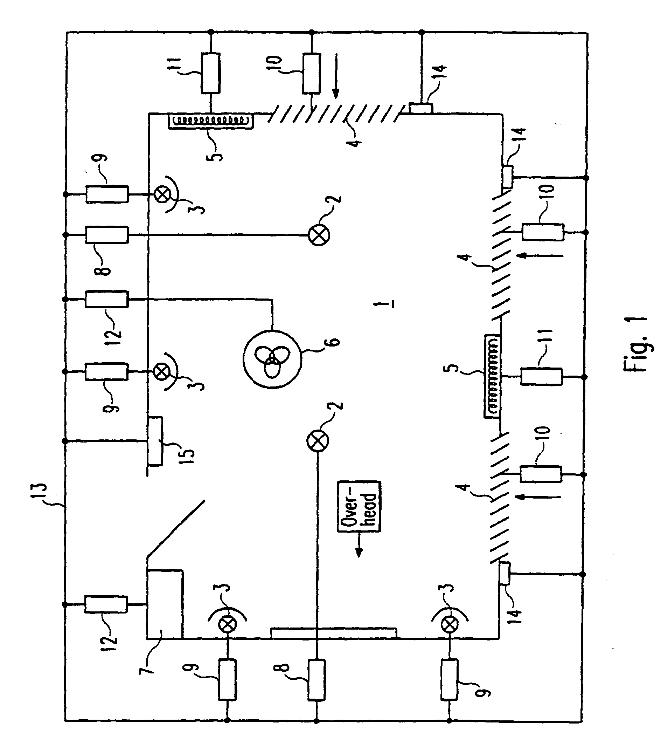

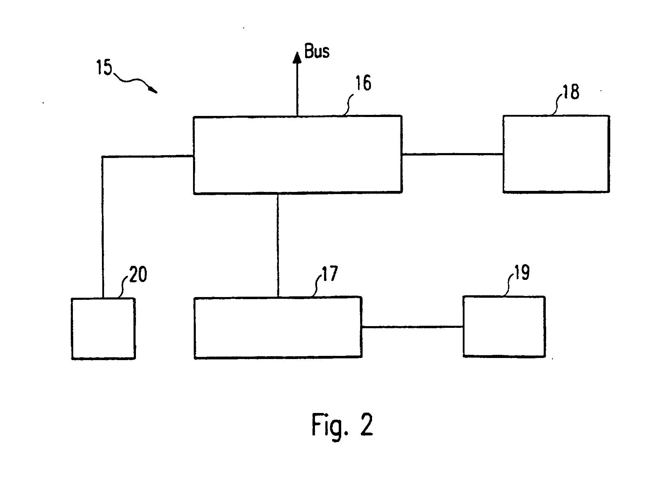

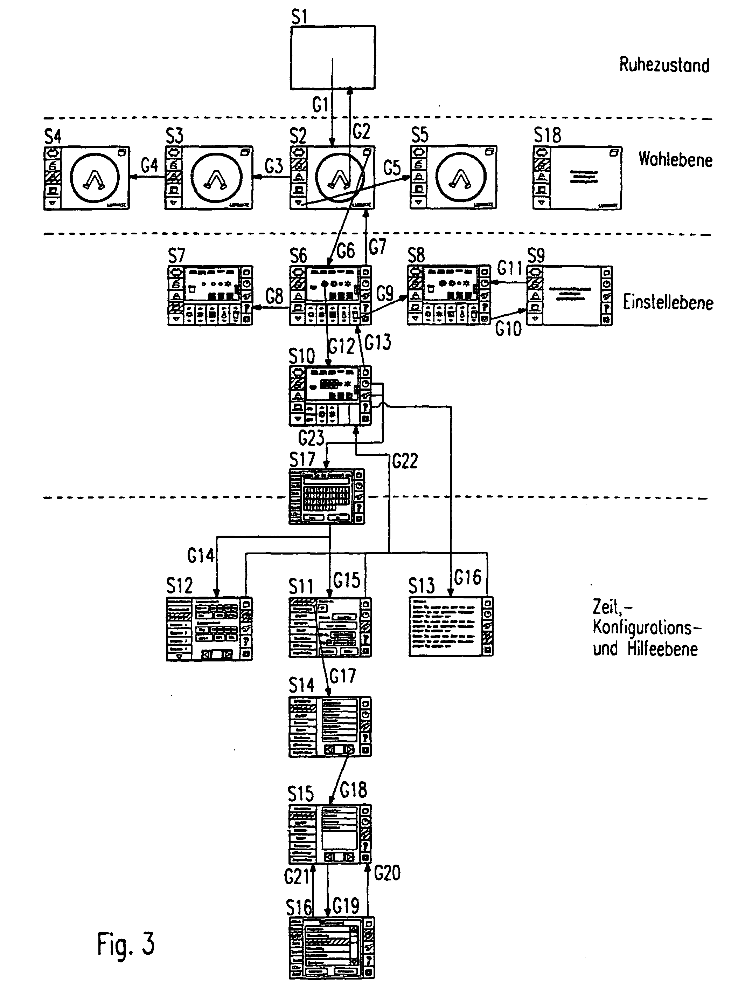

Nachfolgend wird zunächst anhand der Figuren 1 und 2 der Aufbau eines bevorzugten Ausführungsbeispiels des erfindungsgemäßen Systems und der erfindungsgemäßen Steuereinrichtung näher beschrieben. Daran anschließend wird anhand der Figuren 3 bis 11 beispielhaft die einfache und ergonomische Bedienung der Touchscreen-Vorrichtung des in den Figuren 1 und 2 dargestellten Systems näher erläutert.

Figur 1 zeigt in schematischer Darstellung einen Raum 1 mit einer Tür und drei Fenstern. Als Aktoren sind in dem Raum zwei direkte Beleuchtungsvorrichtungen 2, vier indirekte Beleuchtungsvorrichtungen 3, drei steuerbare Jalousien 4 an den Fenstern, zwei Heizkörper 5, ein Deckenventilator 6 und eine Klimaanlage 7 vorgesehen. Die vorliegende Erfindung ist selbstverständlich nicht auf die in Fig. 1 gezeigte Anzahl, Art und Anordnung der einzelnen Aktoren 2 bis 7 beschränkt; es können vielmehr beliebige Anzahlen, Arten und Anordnungen unterschiedlicher Aktoren zur Raumsteuerung ausgewählt werden.

Jeder der Aktoren 2-7 ist mit einem entsprechenden Betriebsgerät 8-12 für den Betrieb des jeweiligen Aktors verbunden. Diese Betriebsgeräte 8 bis 12 sind jeweils mit einem gemeinsamen Bussystem 13 verbunden, welches auch eine Verbindung zur zentralen Steuereinrichtung 15 aufweist. Als Bussystem 13 kann prinzipiell jedes beliebige Bussystem verwendet werden, das zur erfindungsgemäßen Steuerung der unterschiedlichen Betriebsgeräte der Aktoren geeignet ist. Bei der Installation des Systems bzw. der Initialisierung der zentralen Steuereinrichtung 15 erfolgt zunächst eine Raumnummer-Zuweisung. Daran anschließend erfolgt eine automatische Geräteerkennung, d.h. alle an dem Bussystem 13 angeschlossenen Aktoren 2-7 melden sich bei der zentralen Steuereinrichtung 15, so daß am Ende der Initialisierung die zentrale Steuereinrichtung 15 alle Aktoren 2-7 und ihre Identifizierungsnummern bzw. Busnummern kennt ("Hardware-Erkennung").

Neben den Aktoren 2-7 sind in dem Raum 1 an unterschiedlichen Positionen auch verschiedene Sensoren 14 zur Erfassung der Lichteinstrahlung durch die Fenster in den Raum 1 angeordnet. Die Sensoren 14 zur Erfassung der Lichteinstrahlung sind ebenfalls mit dem Bussystem 13 gekoppelt. Auf diese Weise ist es möglich, die Steuerung der einzelnen Aktoren 2-7 des Raumes 1, insbesondere der Jalousien 4 und der Beleuchtungseinrichtungen 2 und 3, auf die Lichteinstrahlung in den Raum 1 abzustimmen. Die Sensoren 14 können dabei sowohl an den Außenwänden des Raumes 1 als auch an geeigneten Stellen innerhalb des Raumes vorgesehen sein.

Neben den in Fig. 1 dargestellten Sensoren 14 zur Erfassung des Lichteinfalls in den Raum 1 können auch verschiedene andere Sensoren in dem Raum 1 positioniert werden, um entsprechende andere Umgebungsbedingungen des Raumes zu erfassen. Denkbar sind hierbei insbesondere Sensoren zur Erfassung der Raumtemperatur, der Luftfeuchtigkeit oder der Luftqualität. Derartige weitere Sensoren sind dann selbstverständlich ebenfalls über das Bussystem mit der zentralen Steuereinrichtung 15 verbunden, um die Aktoren 2-7 zur Beeinflussung der klimatischen Bedingungen in dem Raum 1 zu regeln. Auf diese Weise ist es möglich, mit nur einer einzigen zentralen Steuereinheit 15 sämtliche Aktoren 2 bis 7 eines Raumes zu regeln, so daß zusätzliche Steuereinrichtungen eingespart werden können und der Benutzer nur eine Steuereinrichtung bedienen muß.

Der Aufbau der in Fig. 1 gezeigten zentralen Steuereinrichtung 15 ist schematisch in Fig. 2 dargestellt. Die zentrale Steuereinrichtung 15 weist im wesentlichen eine Steuereinheit 16, wie beispielsweise einen Mikroprozessor, einen Speicher 18 und eine Anzeige- und Eingabevorrichtung 17 auf. Erfindungsgemäß ist die Anzeige- und Eingabevorrichtung als Touchscreen-Vorrichtung ausgebildet. Da die Touchscreen-Technik bereits aus verschiedenen anderen Anwendungen aus dem Stand der Technik hinlänglich bekannt ist, wird an dieser Stelle auf eine nähere Erläuterung derselben verzichtet und auf entsprechende einschlägige Literatur verwiesen.

Die Touchscreen-Vorrichtung 17 dient der Anzeige und der Einstellung der Parameter sämtlicher Aktoren 2-7, die über das Bussystem 13 mit der zentralen Steuereinrichtung 15 verbunden sind. Mittels der Touchscreen-Vorrichtung 17 ist eine für den Benutzer besonders einfache und ergonomische Bedienung der Steuereinrichtung 15 möglich. Insbesondere ist es für den Benutzer nicht erforderlich, besondere programmiertechnische Kenntnisse zu besitzen. Derartige Kenntnisse sind selbst für die Erstinstallation zum Konfigurieren des Systems nicht unbedingt notwendig. Die Möglichkeiten der Bedienung der Steuereinrichtung 15 über die Touchscreen-Vorrichtung 17 werden im einzelnen weiter unten anhand der Figuren 3 bis 11 erläutert.

In einer bevorzugten Ausführungsform der Erfindung ist die Touchscreen-Vorrichtung 17 mit einem sog. Screensaver-Modus versehen. Diese Screensaver-Modus entspricht im wesentlichen der bei PC's bekannten Bildschirmschonerfunktion. Nach einer vorbestimmten Zeitdauer der Nicht-Bedienung, d.h. des Nicht-Berührens des Bildschirms der Touchscreen-Vorrichtung wird die Touchscreen-Vorrichtung 17 ausgeschaltet bzw. stand by-geschaltet, um das Display der Touchscreen-Vorrichtung zu schonen und Energie zu sparen.

Um die Touchscreen-Vorrichtung 17 wieder aus dem Screensaver-Modus zu aktivieren, sind verschiedene Möglichkeiten vorgesehen. Einerseits kann die Touchscreen-Vorrichtung 17 durch Berühren ihres Bildschirms wieder aktiviert werden. Eine andere Möglichkeit besteht darin, einen entsprechenden Sensor 19 an oder in der Nähe der Touchscreen-Vorrichtung 17 vorzusehen, der bei Annäherung des Benutzers an die Touchscreen-Vorrichtung 17 diese wieder aus dem Screensaver-Modus aktiviert. Ein derartiger Sensor 19 kann beispielsweise ein Infrarot-Näherungsmelder sein.

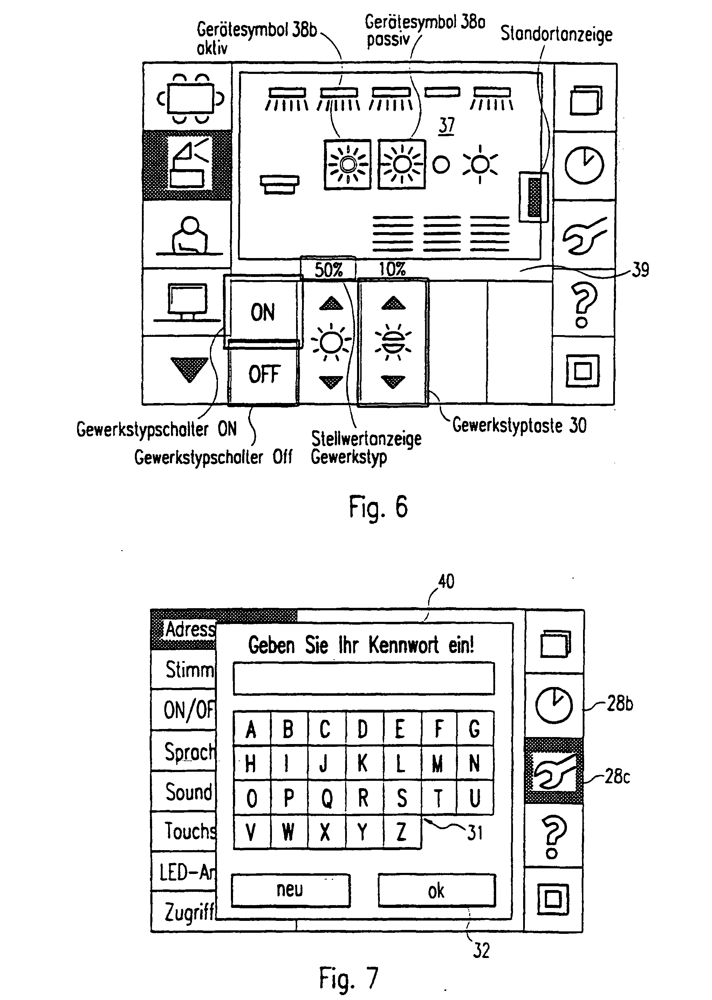

Der mit dem Mikroprozessor 16 verbundene Speicher 18 der zentralen Steuereinrichtung 15 dient insbesondere dem Speichern der verschiedenen Standardeinstellungen der Parameter der in dem Raum 1 vorgesehenen Aktoren 2 bis 7. Die Konfigurationen der Standard-Einstellungen der Parameter der einzelnen Aktoren 2 bis 7 erfolgt bei der Installation des Systems in dem Raum 1 und kann wahlweise auch noch zu späteren Zeitpunkten durch den Benutzer wiederholt und verändert werden. Der Ablauf der Konfigurierung der Standardeinstellungen wird weiter unten anhand der Figuren 7 bis 10 näher beschrieben.

Die oben genannten Standardeinstellungen der Parameter der Aktoren 2-7 werden für unterschiedliche Stimmungen für den jeweiligen Raum 1 abgespeichert. Als Stimmungen werden hierbei die in dem Raum 1 beabsichtigten Tätigkeiten bezeichnet, wie beispielsweise Besprechung, Overhead-Präsentation, Schreibtischarbeit, Computerarbeit und dergleichen. Falls der Benutzer mittels der Touchscreen-Vorrichtung 17 eine von ihm gewünschte Stimmung auswählt, werden die entsprechenden Standardeinstellungen der Parameter der Aktoren 2-7 aus dem Speicher 18 abgerufen, in den Mikroprozessor 16 zur Steuerung der Aktoren 2-7 eingelesen und auf der Touchscreen-Vorrichtung 17 dem Benutzer angezeigt. Es wird dann dem Benutzer ermöglicht, einzelne Parameter verschiedener Aktoren 2-7 individuell nach seinen persönlichen Wünschen zu verändern.

Weiter weist die in Fig. 2 dargestellte zentrale Steuereinrichtung 15 einen Temperatursensor 20 auf, der mit dem Mikroproszessor 16 verbunden ist. Dieser Temperatursensor 20 ist vorzugsweise an oder in der Nähe der Touchscreen-Vorrichtung 17 angeordnet und erfüllt im wesentlichen zwei Funktionen. Einerseits erfolgt eine nachführende Kontrastregelung für die Bedienoberfläche der Touchscreen-Vorrichtung 17 in Abhängigkeit von der durch den Sensor 20 erfaßten Temperatur. Darüberhinaus kann mittels desselben Temperatursensors 20 eine Erfassung der Raumtemperatur erfolgen.

Zu diesem Zweck muß allerdings bei der Initialisierung des Systems zunächst der Temperatursensor 20 kalibriert werden, da er an keiner repräsentativen Stelle innerhalb des Raumes 1 angeordnet ist. Hierzu erfolgt eine Referenzpunktmessung, bei der beispielsweise die Temperatur in der Mitte des Raumes 1 gemessen wird, die Anzeige des Temperatursensors bei der Touchscreen-Vorrichtung 17 erfaßt wird und dann abhängig von der tatsächlich in dem Raum 1 gemessenen Temperatur korrigiert wird. Somit kann in vorteilhafter Weise die Temperaturerfassung und -regelung mit der Aktorensteuerung verbunden werden.

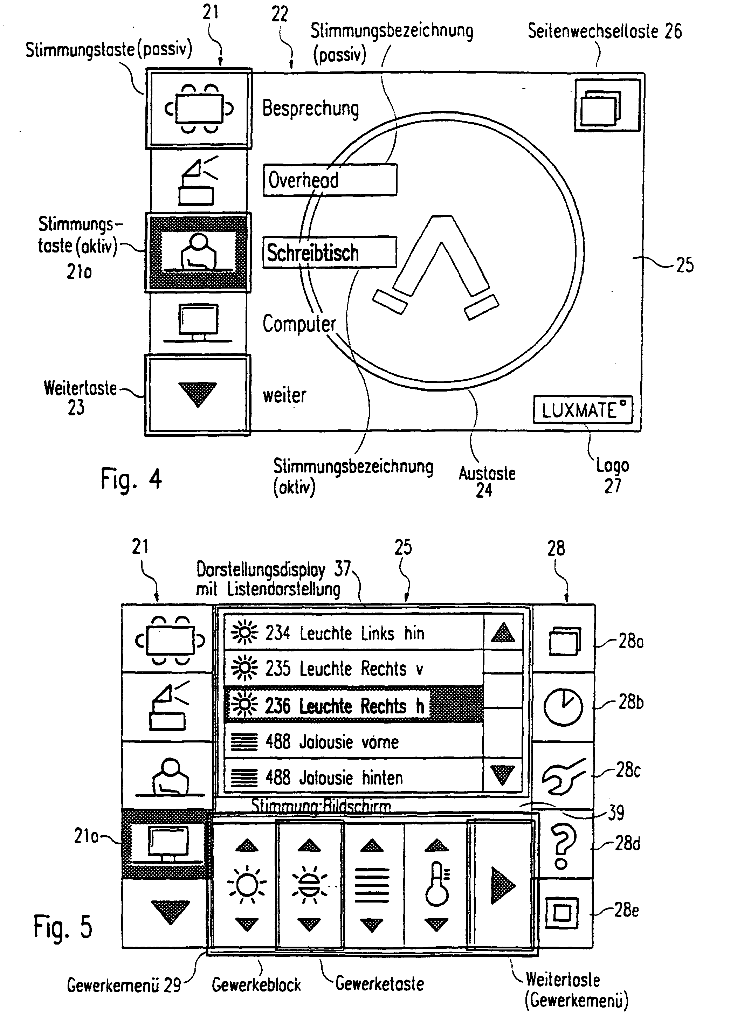

In Fig. 3 ist ein Gesamtüberblick über die dem Benutzer zur Verfügung stehenden Bedienebenen der Touchscreen-Vorrichtung 17 dargestellt. Neben dem ganz oben in Fig. 3 dargestellten Ruhezustand im Screensaver-Modus werden dem Benutzer in dem gezeigten Ausführungsbeispiel insgesamt drei Bedienebenen zur Verfügung gestellt, nämlich eine erste Auswahlebene, eine zweite Einstellebene und eine dritte Zeit-, Konfigurations- und Hilfeebene. In den einzelnen Ebenen sind die beispielhaften Darstellungen der Bedienoberfläche der Touchscreen-Vorrichtung 17 mit S1 bis S18 und die Schritte zwischen den einzelnen Darstellungen mit G1 bis G23 dargestellt. Einzelne der in Fig. 3 gezeigten Darstellungen der Bedienoberfläche sind in den Fig. 4 bis 11 vergrößert gezeigt.

Es wird darauf hingewiesen, daß die Auswahl und die Verbindung der einzelnen Bedienebenen, die grafische Gestaltung der Bedienoberflächen, die dem Benutzer angebotenen Auswahltasten und die Stimmungen und Parameter der Aktoren in den Fig. 3 bis 11 nur beispielhaft dargestellt sind und die vorliegende Erfindung nicht auf diese Ausführungsformen beschränkt ist. Beispielsweise können je nach den Anforderungen des Benutzers andere und/oder weitere Stimmungen mit ihren entsprechenden Standardeinstellungen im Speicher 18 abgelegt und dem Benutzer zur Auswahl angeboten werden. Außerdem ist es möglich, die Anzahl und den Aufbau der Bedienebenen abzuwandeln, um zum Beispiel nur zwei oder mehr als drei Bedienebenen vorzusehen. Die grafische Gestaltung der einzelnen Elemente der Bedienoberfläche hat keinen Einfluß auf die Funktionalität der Touchscreen-Vorrichtung 17, so daß sie ohne weiteres den Bedürfnissen des Benutzers, beispielsweise für Büroräume oder Industriezwecke, angepaßt werden kann. Auch die Sprache der Bedienoberfläche ist natürlich nicht auf deutsch beschränkt. Vorzugsweise kann die gewünschte Bediensprache vom Benutzer oder bereits werksseitig in der Konfigurationsebene aus mehreren üblichen Sprachen ausgewählt werden.

Die durch die dargestellte Bedienoberfläche der erfindungsgemäßen Touchscreen-Vorrichtung erreichten Ziele sind insbesondere eine leicht verständliche und logische Benutzerführung, eine Bedienergonomie und ein graphisch ansprechendes Design. Die in den einzelnen Figuren gezeigten Tasten der Touchscreen-Vorrichtung können in üblicher Weise durch Berührung durch den Benutzer aktiviert werden. Hierbei ist neben einer normalen Berührung bzw. einem Singleklick auch die Verwendung von sog. Doubleklicks, d.h. zwei Berührungen derselben Taste innerhalb eines einstellbaren Zeitraumes, und/oder sog. Extendedklicks, d.h. die Berührung derselben Taste für einen längeren Zeitraum, möglich. Hierdurch können beispielsweise Doppelbelegungen einzelner Tasten erreicht werden. Auf die technische Funktionsweise der Touchscreen-Vorrichtung und der Aktivierung der einzelnen Tasten der Touchscreen-Vorrichtung 17 soll an dieser Stelle nicht weiter eingegangen werden, da diese dem Fachmann an sich bekannt sind.

Zunächst ist bei S1 in Fig. 3 die Bedienoberfläche im bereits oben beschriebenen Screensaver-Modus dargestellt. Die Bedienoberfläche der Touchscreen-Vorrichtung 17 kann in diesem Zustand beispielsweise ohne jede Kennzeichnung sein oder aber einen Hinweis enthalten, daß der Bildschirm der Touchscreen-Vorrichtung 17 durch Berühren bzw. Drücken des Bildschirms aktiviert werden kann. Der Screensaver-Modus wird zum einen eingenommen, wenn die Steuereinrichtung 15 bei Verlassen des Raumes 1 vom Benutzer ausgeschaltet bzw. in den Standby-Modus versetzt wird oder wenn bei einem durch den Benutzer aktivierten System der Bildschirm für eine vorbestimmte Zeitdauer nicht betätigt wird. Abhängig von der Ausgangssituation, aus der die Touchscreen-Vorrichtung 17 in den Screensaver-Modus gelangt, wird beim Aktivieren der Touchscreen-Vorrichtung durch den Benutzer entweder das System eingeschaltet und die Auswahlebene angezeigt (Schritt G1 in Fig. 3) oder das System eingeschaltet, die Auswahlebene angezeigt und zusätzlich die Auswahl der zuletzt ausgewählten Einstellungen abgerufen.

In der durch S2 bis S5 und S18 veranschaulichten Auswahlebene kann der Benutzer zunächst die von ihm gewünschte Grundstimmung, wie beispielsweise Besprechung, Overhead-Präsentation, Schreibtischarbeit, Comupterarbeit oder dergleichen auswählen, ohne mit der kompletten Bedienfunktionalität überflutet zu werden. Ein Beispiel der Anzeige in der Auswahlebene, wie sie etwa der Abbildung S2 in Fig. 3 entspricht, ist in Fig. 4 vergrößert dargestellt. Die Bedienoberfläche zeigt hier ein auf der linken Seite angeordnetes Menü von mehreren in einer Spalte angeordneten Stimmungstasten 21. Die Stimmungstasten 21 sind durch einfach verständliche Symbole gekennzeichnet. Die Stimmungstasten 21 haben eine feste Abmessung, welche auch gleichzeitig den sensitiven Bereich bestimmt. Zusätzlich kann neben den einzelnen Stimmungstasten 21 optional eine Kurzbeschreibung der jeweiligen Stimmung angezeigt werden (22). Das in Fig. 4 gezeigte Menü besteht aus fünf Tasten 21, 23; stehen dem Benutzer mehr als fünf auswählbare Stimmungen zur Verfügung, erfolgt die Einblendung einer Weiterschalttaste 23 als unterste Taste in der Spalte. Bei deren Betätigung werden weitere auswählbare Stimmungen angezeigt, so daß der Benutzer durch die einzelnen Angebote blättern kann (Schritt G5 in Fig. 3).

Bei Aktivierung einer gewünschten Stimmungstaste 21a wird in dem Informationsbereich 25 rechts neben der Spalte der Stimmungstasten 21 kurzzeitig ein Informationstext zu der ausgewählten Stimmung angezeigt (Schritt G3 und Abbildung S3 in Fig. 3). Nach Ablauf der voreingestellten Zeitdauer wechselt die Darstellung wieder zurück in die in Fig. 4 gezeigte Form (Schritt G4 in Fig. 3), wobei die zuvor aktivierte Stimmungstaste 21a entsprechend hervorgehoben ist (Abbildung S4 in Fig. 3).

Neben der farblichen Kennzeichnungen der aktivierten Stimmungstaste 21 können auch noch weitere grafische Unterscheidungen der einzelnen Stimmungstasten vorgesehen sein. Zum Beispiel können die Stimmungstasten von Stimmungen, die derzeit vom Benutzer (noch) nicht ausgewählt werden können, blasser dargestellt werden als die übrigen, auswählbaren Stimmungstasten.

Neben dem Stimmungsmenü 21 ist der Informationsbereich 25 vorgesehen. In der Auswahlebene wird der Informationsbereich 25 nur auf der linken Seite durch das Stimmungsmenü 21 begrenzt. In dem Informationsbereich 25 werden je nach Betriebszustand unterschiedliche Informationen angezeigt. Wie oben beschrieben, erfolgt im Informationsbereich 25 bei der Auswahl einer Stimmung für eine kurze Zeitdauer eine Kurzdarstellung der ausgewählten Stimmung. Während der übrigen zeit wird in der Auswahlebene im Informationsbereich 25 eine Ausschalttaste 24 zum Ausschalten der Touchscreen-Vorrichtung 17 angezeigt. Durch Betätigen der Ausschalttaste 24 wird aus dem Speicher 18 eine zuvor konfigurierte Aus-Stimmung, zum Beispiel zum Ausschalten sämtlicher Beleuchtungen 2, 3 im Raum 1, aufgerufen, und die Touchscreen-Vorrichtung 17 gelangt nach einer vorbestimmten Zeit in den Ruhezustand (Schritt G2 in Fig. 3)

Ferner ist es möglich, im Informationsbereich bei Eintreffen bestimmter Ereignisse im System einen entsprechenden Anlageninformationstext anzuzeigen (Abbildung S18 in Fig. 3). Hier kann der Benutzer beispielsweise über Störungen oder Alarme informiert werden. Nach Ablauf einer vorbestimmten Zeitdauer kehrt die Bedienoberfläche wieder zur Anzeige gemäß Fig. 4 zurück.

Weiter werden in der Auswahlebene eine Seitenwechseltaste 26 und optional ein Firmenlogo 27 angezeigt. Durch Betätigen der Seitenwechseltaste 26 gelangt der Benutzer von der Auswahlebene in die Einstellebene (Schritt G6 in Fig. 3). Außerdem kann wahlweise auch das Firmenlogo 27 mit einer Tastenfunktion unterlegt sein, bei deren Aktivierung im Informationsbereich 25 eine Informationsseite beispielsweise mit Kontaktadresse, Hotline, etc. angezeigt wird.

Beispielhafte Darstellungen der Bedienoberfläche in der Einstellebene sind in den Fig. 5 und 6 dargestellt. Die Einstellebene (S6 bis S10 in Fig. 3) gibt dem Benutzer ein übersichtliches, leicht verständliches Bild über das System. Die Einstellebene bietet dem Benutzer die Möglichkeit, einfach und verständlich einzelne Detaileinstellungen der in dem Raum 1 befindlichen Aktoren 2-7 zu prüfen und individuell einzustellen.

Wie in den Fig. 5 und 6 gezeigt, ist in der Einstellebene der Informationsbereich 25 links durch das Stimmungsmenü 21 begrenzt, wobei die zuvor ausgewählte Stimmung 21a hervorgehoben ist, und rechts durch ein Servicemenü 28 begrenzt. Auch in der Einstellebene kann die Stimmung jederzeit ausgewählt werden.

Das Servicemenü 28 im rechten Bereich der Bedienoberfläche weist insgesamt fünf in einer Spalte untereinander angeordnete Servicetasten 28a-e auf. Die oberste Servicetaste ist die Seitenwechseltaste 28a, mit der der Benutzer aus der Einstellebene zur Auswahlebene zurückgelangt (Schritt G7 in Fig. 3) oder von einer Subebene in der Einstellebene (Abbildung S10 in Fig. 3) zur Hauptebene in der Einstellebene zurückgelangt (Schritt G13 in Fig. 3). Weiter sind eine Zeittaste 28b, mit der die Zeit(konfigurations)ebene aufgerufen wird (Schritte G23, G14 in Fig. 3), eine Servicetaste 28c, mit der die Konfigurationsebene aufgerufen wird (Schritte G23, G15 in Fig. 3), eine Hilfetaste 28d, mit der die Hilfeebene aufgerufen wird (Schritt G16 in Fig. 3) und eine Speichertaste 28e, mit der die eingestellte Stimmung gespeichert wird (Schritt G10 in Fig. 3), vorgesehen.

Im Informationsbereich 25 der Bedienoberfläche der Touchscreen-Vorrichtung 17 werden in der Einstellebene die in dem System vorhandenen Aktoren 2-7 in einer Listendarstellung (Fig. 5) oder einer Raumanordnungdarstellung (Fig. 6) angezeigt (Darstellungsdisplay 37). Die Raumanordnungsdarstellung zeigt einen abstrakten Raum 1, in dem die Symbole 38a, 38b der einzelnen Aktoren 2-7 entsprechend ihrer tatsächlichen physikalischen Anordnung räumlich positioniert sind, wobei zwischen passiven Gerätesymbolen 38a und aktiven, d.h. ausgewählten Gerätesymbolen 38b unterschieden wird, die sich zum Beispiel farblich voneinander unterscheiden. Zusätzlich können zur Unterstützung des Benutzers wesentliche Elemente des Raumes 1, wie Türen, Fenster und Standort der Touchscreen-Vorrichtung, abstrakt dargestellt werden. Die Positionierung der Aktoren 2-7 erfolgt ausschließlich in der unten beschriebenen Konfigurationsebene. Die Listendarstellung soll insbesondere dort zur Anwendung kommen, wo die abstrakte Raumanordnungsdarstellung ungenügend ist, wie beispielsweise bei komplizierten Raumformen oder einer sehr großen Anzahl an Aktoren.

Die einzelnen angezeigten Aktoren 2-7 können in beiden oben genannten Darstellungsformen vom Benutzer angewählt werden, wobei die angewählten Aktoren graphisch hervorgehoben werden. Die zu dem angewählten Aktor 2-7 gehörigen Parameter werden im Informationsbereich 25 in einer sogenannten Informationsleiste 39 unterhalb des Darstellungsdisplays 37 der Aktoren angezeigt. Neben der Darstellung der derzeitig aktuellen Parametereinstellungen sind in der Informationsleiste 39 auch andere Informationen zum Beispiel zur ausgewählten Stimmung anzeigbar.

Unterhalb der Informationsleiste 39 ist ein sogenanntes Gewerke- bzw. Aktorenmenü 29 dargestellt, das abhängig von dem im Darstellungsdisplay 37 angewählten Gerätesymbol 38b verschiedene Einstelltasten 30 zur Verfügung stellt. Über diese Einstelltasten 30 können die vorgegebenen Parameter aus den aus dem Speicher 18 abgerufenen Standardeinstellungen der Aktoren 2-7 individuell vom Benutzer verändert werden.

Während in der Auswahlebene vom Benutzer die gewünschte Stimmung ausgewählt wird, wie dies oben beschrieben ist, und dadurch die entsprechenden Standardeinstellungen der Parameter der einzelnen Aktoren 2-7 im Raum 1 aus dem Speicher 18 ausgelesen werden, werden in der Einstellebene dem Benutzer diese Standardeinstellungen zusammen mit den vorhandenen Aktoren 2-7 angezeigt, und der Benutzer kann diese Standardeinstellungen dann durch Bedienung der Tasten 30 nach seinen individuellen Wünschen verändern. Durch Betätigen der Speichertaste 28e im Servicemenü 28 können die so veränderten Parametereinstellungen auch gespeichert werden (Schritt G10 in Fig. 3). Die Speicherung der Parameter wird dem Benutzer kurzzeitig bestätigt (Abbildung S9 in Fig. 3) und anschließend kehrt die Darstellung der Bedienoberfläche wieder in die in den Fig. 5 und 6 gezeigten Formate zurück (Schritt G11 in Fig. 3).

Während die einzelnen Parameter der Aktoren 2-7 in der Einstellebene eingestellt werden können, erfolgt zum Beispiel die Gerätekonfigurierung und die Angabe der Anordnung der einzelnen Aktoren 2-7 im Raum 1 in der Konfigurationsebene. Diese Einstellungen sind typischer Weise auch nur bei der erstmaligen Installation des Systems erforderlich.

Betätigt der Benutzer in der Einstellebene eine der Servicetasten 28b oder 28c, um in die Zeitkonfigurations- bzw. die Konfigurationsebene zu gelangen, so erscheint zunächst ein Kennwortfenster 40, wie dies in Fig. 7 dargestellt ist (Schritt G23 in Fig. 3). Das Kennwortfenster hat den Zweck, verschiedene Einstellungsmöglichkeiten vor unbefugten Zugriffen zu schützen. Die Eingabe des Kennworts erfolgt über die Buchstabentasten 31, die Bestätigung der Eingabe erfolgt mit der ok-Taste 32. Bei der Eingabe des Kennworts über die Buchstabentasten 31 erfolgt die Darstellung der eingegebenen Zeichen in üblicher Weise in verschlüsselter Darstellung.

Bei korrekter Eingabe des Kennworts schaltet die Touchscreen-Vorrichtung 17 weiter in die ausgewählte Zeit(konfigurations)- oder Konfigurationsebene (Schritt G14 bzw. G15 in Fig. 3).

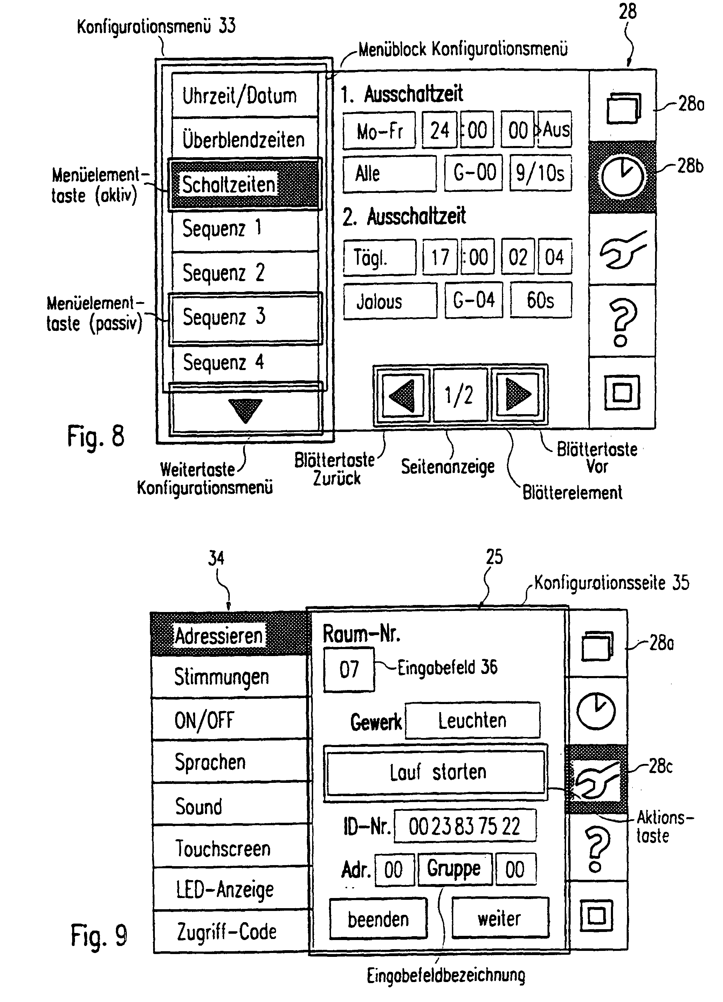

Eine beispielhafte Darstellung der Bedienoberfläche in der Zeitkonfigurationsebene ist in Fig. 8 vergrößert dargestellt. Diese Zeitebene dient der Einstellung verschiedene Zeiteinstellungen (Uhrzeit, Schaltzeiten, Sequenzen, und dergleichen).

In der Zeitebene wird der Informationsbereich 25 links durch ein sogenanntes Konfigurationsmenü 33 begrenzt, mit dem der Benutzer eine Kategorie der einstellbaren Parameter auswählen kann. Die einstellbaren Parameter werden dann im Informationsbereich 25 themenbezogen und strukturiert dargestellt. Rechts ist der Informationsbereich 25 durch das Servicemenü 28 begrenzt, in dem die aktivierte Zeittaste 28b hervorgehoben ist, um dem Benutzer anzuzeigen, daß er sich in der Zeitebene befindet.

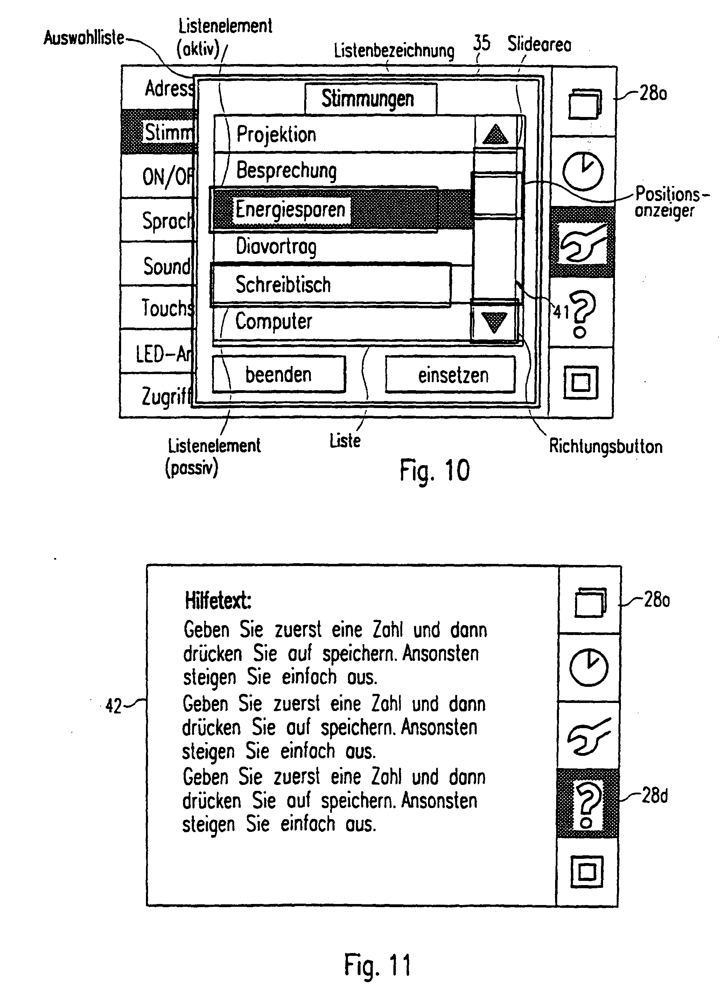

In den Fig. 9 und 10 sind zwei Beispiele von Darstellungen der Bedienoberfläche in der Konfigurationsebene dargestellt. Die Konfigurationsebene dient zur Bedienung und Darstellung der verschiedenen Konfigurationseinstellungen und Geräteeinstellungen. In der linken Spalte der Bedienoberfläche befindet sich das Konfigurationsmenü 34, über das die Kategoriewahl erfolgt. Die ausgewählte Kategorie wird über einen entsprechende graphische Hervorhebung als ausgewählt dargestellt. Die einstellbaren Parameter der jeweiligen ausgewählten Kategorie werden im Informationsbereich 25 der Bedienoberfläche themenbezogen und strukturiert dargestellt (35).

Die konfigurationsseite 35 zeigt je nach ausgewähltem Menüelement entsprechende Einstellparameter an und bietet zusätzlich noch die Möglichkeit den jeweiligen Parameter einzustellen. In dem Eingabefeld befinden sich beispielsweise mehrere Eingabefeldtasten 36. In einem anderen Fall wird eine Auswahlliste über die Möglichkeit der Programm- oder Geräteeinstellungen angezeigt wird (Fig. 10). Die in Fig. 10 beispielhaft dargestellte Liste hat den Zweck, alle zur Verfügung stehenden Parameterwerte oder sonstige Informationen aufzulisten. Der Aufbau der Liste kann ein- oder mehrspaltig sein, abhängig von der darzustellenden Information. Die Liste enthält mehrere Listenelemente und einem sog. Scrollbar 41, um ein Bewegen innerhalb einer größeren Liste zu ermöglichen und zu erleichtern. Jedes einzelne Listenelement dient sowohl als Anzeige als auch als Eingabemöglichkeit.

Durch Betätigen der Blättertaste 28a in der rechten Spalte der Bedienoberfläche gelangt der Benutzer aus der Zeit- oder der Konfigurationsebene wieder zurück in die Einstellebene (Schritt G22 in Fig. 3).

Wird von dem Benutzer in der Einstellebene oder in der Zeit- oder der Konfigurationsebene die Hilfetaste 28d des Servicemenüs 28 aktiviert, so wechselt die Touchscreen-Vorrichtung 17 in die Hilfeebene (Schritt G16 in Fig. 3). Die Hilfeebene dient dem Benutzer als elektronisches Handbuch, wobei dem Benutzer ein entsprechender Informationstext 42 angezeigt wird (Fig. 11 und Abbildung S13 in Fig. 3).

Beim Öffnen der Hilfeebene wird als erstes das Thema geöffnet, das den letzten Benutzereingriff erklärt und/oder die Beschreibung der zuletzt aufgerufenen Seite oder Ebene enthält. Über ein Hilfemenü (nicht dargestellt) kann der Benutzer weitere Hilfethemen anwählen.

Über die Seitenwechseltaste 28a des Servicemenüs 28 wird wieder in die Einstellebene (Schritt G22 in Fig. 3) oder die Zeit- oder Konfigurationsebene zurückgewechselt, je nachdem von wo aus der Benutzer die Hilfeebene aufgerufen hat.

## Patentansprüche

1. System zum Steuern mehrerer in einem Raum angeordneter Aktoren (2-7), mit einer zentralen Steuereinrichtung (15), die mit sämtlichen Aktoren (2-7) in dem Raum (1) verbunden ist, zum Steuern verschiedener Parameter, der einzelnen Aktoren (2-7),
wobei die Steuereinrichtung (15) eine Touchscreen-Vorrichtung (17) zur Anzeige und Einstellung der Aktoren und der Parameter der Aktoren (2-7) aufweist,
**dadurch gekennzeichnet,**
**daß** auf der Touchscreen-Vomchtung (17) neben den Aktoren (2-7) auch die Anordnung des Raumes (1) und wesentlicher Elemente des Raumes darstellbar ist,
**daß** die Positionen der Aktoren (2-7) in dem jeweiligen Raum (1) durch den Benutzer über die Touchscreen-Vorrichtung (17) eingebbar sind,
und **daß** die Anzeige und Einstellung der Parameter der Aktoren (2-7) auf der Touchscreen-Vorrichtung (17) in drei Bedienebenen erfolgt,
wobei die erste Bedienebene zum Abruf von Standardeinstellungen der Parameter der Aktoren (2-7) dient, die bestimmten Stimmungen entsprechen,
wobei die zweite Bedienebene zur Darstellung und Veränderung der Parameter der einzelnen Aktoren (2-7) dient,
und wobei die dritte Bedienebene der Konfiguration der Aktoren (2-7) sowie der Zuordnung der Aktoren (2-7) zu Positionen in dem jeweiligen Raum (1) dient.

2. System nach Anspruch 1,
**dadurch gekennzeichnet,**
**daß** die Aktoren (2-7) über ein gemeinsames Bussystem (13) mit der zentralen Steuereinrichtung (15) verbunden sind.

3. System nach Anspruch 2,
**dadurch gekennzeichnet,**
**daß** bei der Initialisierung des Systems die an dem Bussystem (13) angeschlossenen Aktoren (2-7) automatisch von der Steuereinrichtung (15) erkennbar sind.

4. System nach einem der vorhergehenden Ansprüche,
**dadurch gekennzeichnet,**
**daß** die Touchscreen-Vomchtung (17) nach einer vorbestimmten Zeitdauer der Nicht-Bedienung zum Energiesparen und Schonen des Bildschirms der Touchscreen-Vorrichtung (17) ausgeschaltet wird (Screensaver-Modus).

5. System nach Anspruch 4,
**dadurch gekennzeichnet,**
**daß** die Touchscreen-Vorrichtung (17) durch Berühren ihres Bildschirms aus dem Screensaver-Modus aktivierbar ist.

6. System nach Anspruch 4,
**dadurch gekennzeichnet,**
**daß** die Steuereinrichtung (15) einen Sensor (19) aufweist, der bei Annäherung des Benutzers an die Touchscreen-Vorrichtung (17) diese aus dem Screensaver-Modus aktiviert.

7. System nach einem der vorhergehenden Ansprüche,
**dadurch gekennzeichnet,**
**daß** die Steuereinrichtung (15) weiter eine Speichereinrichtung (18) aufweist, in der verschiedene Standardeinstellungen der Parameter der Aktoren (2-7) speicherbar sind.

8. System nach einem der vorhergehenden Ansprüche,
**dadurch gekennzeichnet,**
**daß** das System weiter einen oder mehrere Sensoren (14, 20) zur Erfassung von Umgebungsbedingungen in dem Raum (1) aufweist.

9. System nach Anspruch 8,
**dadurch gekennzeichnet,**
**daß** die Steuereinrichtung (15) eine Steuervorrichtung zum Verändern der Parameter der Aktoren (2-7) entsprechend den von den Sensoren (14, 20) erfaßten Meßwerte der Umgebungsbedingungen aufweist.

## Claims

1. System for the control of a plurality of actuators (2-7) arranged in a room, having a central control device (15) which is connected with all actuators (2-7) in the room (1) for the control of various parameters of the individual actuators (2-7),
the control device (15) having a touch screen device (17) for the display and setting of the actuators and the parameters of the actuators (2-7),
**characterised in that**,
on the touch screen device (17), apart from the actuators (2-7), also the arrangement of the room (1) and significant elements of the room can be represented,
**in that** the positions of the actuators (2-7) in the room (1) concerned can be entered by the user via the touch screen device (17),
and **in that** the display and setting of the parameters of the actuators (2-7) on the touch screen device (17) is effected in three operating levels,
the first operating level serving for calling up standard settings of the parameters of the actuators (2-7), which correspond to certain moods,
the second operating level serves for the representation and alteration of the parameters of the individual actuators (2-7),
and the third operating level serves for the configuration of the actuators (2-7), and the allocation of the actuators (2-7) to positions in the room concerned (1).

2. System according to claim 1,
**characterised in that**,
the actuators (2-7) are connected with the central control device (15) via a common bus system (13).

3. System according to claim 2,
**characterised in that**,
upon the initialisation of the system, the actuators (2-7) connected to the bus system (13) can be automatically recognized by the control device (15).

4. System according to any preceding claim,
**characterised in that**,
after a predetermined time duration of non-operation, the touch screen device (17) is switched off to save energy and conserve the screen of the touch screen device (17) (screen saver mode)

5. System according to claim 4,
**characterised in that**,
the touch screen device (17) can be activated out of the screen saver mode by touching its screen.

6. System according to claim 4,
**characterised in that**,
the control device (17) has a sensor (19) which upon the user approaching the touch screen device (17) activates this out of the screen saver mode.

7. System according to any preceding claim,
**characterised in that**,
the control device (15) has further a memory device (18) in which there can be stored various standard settings of the parameters of the actuators (2-7).

8. System according to any preceding claim,
**characterised in that**,
the system further has one or more sensors (14, 20) for the detection of environmental conditions in the room (1).

9. System according to claim 8,
**characterised in that**,
the control device (15) has a control means for the alteration of the parameters of the actuators (2-7) in correspondence with the measurement values of the environmental conditions detected by the sensors (14, 20).

## Revendications

1. Système permettant de commander plusieurs actionneurs (2-7) disposés dans une pièce, avec un dispositif de commande central (15), relié à tous les actionneurs (2-7) dans la pièce (1) pour commander différents paramètres des différents actionneurs (2-7), moyennant quoi le dispositif de commande (15) présente un dispositif à écran tactile (17) pour l'affichage et le réglage des actionneurs et des paramètres des actionneurs (2-7), **caractérisé en ce que** sur le dispositif à écran tactile (17) peut être représentée, outre les actionneurs (2-7), également la disposition de la pièce (1) et des éléments essentiels de la pièce, **en ce que** les positions des actionneurs (2-7) dans la pièce respective (1) peuvent être entrées par l'utilisateur à l'aide du dispositif à écran tactile (17), et **en ce que** l'affichage et le réglage des paramètres des actionneurs (2-7) s'effectuent sur le dispositif à écran tactile (17) dans trois niveaux de menu, moyennant quoi le premier niveau de menu sert à appeler les réglages standard des paramètres des actionneurs (2-7), qui correspondent à certaines dispositions, moyennant quoi le deuxième niveau de menu sert à représenter et à modifier les paramètres des différents actionneurs (2-7), et moyennant quoi le troisième niveau de menu sert à configurer les actionneurs (2-7) ainsi qu'à affecter les actionneurs (2-7) aux positions dans la pièce respective (1).

2. Système selon la revendication 1, **caractérisé en ce que** les actionneurs (2-7) sont reliés par un système de bus commun (13) au dispositif de commande central (15).

3. Système selon la revendication 2, **caractérisé en ce que**, lors de l'initialisation du système, les actionneurs (2-7) raccordés au système de bus (13) sont automatiquement identifiables par le dispositif de commande (15).

4. Système selon l'une quelconque des revendications précédentes, **caractérisé en ce que** le dispositif à écran tactile (17) s'éteint (mode économiseur d'écran) après un temps prédéfini d'absence d'utilisation pour économiser de l'énergie et ménager l'écran du dispositif à écran tactile (17).

5. Système selon la revendication 4, **caractérisé en ce qu'**on peut activer le dispositif à écran tactile (17) et ainsi sortir du mode économiseur d'écran en touchant l'écran.

6. Système selon la revendication 4, **caractérisé en ce que** le dispositif de commande (15) présente un capteur (19) qui active le dispositif à écran tactile (17) hors du mode économiseur d'écran lorsqu'un utilisateur s'approche de lui.

7. Système selon l'une quelconque des revendications précédentes, **caractérisé en ce que** le dispositif de commande (15) présente en outre une mémoire (18) dans laquelle peuvent être enregistrés différents réglages standard des paramètres des actionneurs (2-7).

8. Système selon l'une quelconque des revendications précédentes, **caractérisé en ce que** le système présente en outre un ou plusieurs capteurs (14, 20) pour détecter les conditions environnementales de la pièce (1).

9. Système selon la revendication 8, **caractérisé en ce que** le dispositif de commande (15) présente un dispositif de commande pour modifier les paramètres des actionneurs (2-7) en fonction des valeurs mesurées des conditions environnementales détectées par les capteurs (14, 20).
